# EUROPEAN PATENT SPECIFICATION

(11) **EP 1 041 520 B1**
(45) Date of publication and mention of the grant of the patent: **10.08.2005**
(21) Application number: 00105623.3
(22) Date of filing: 16.03.2000
(51) Int. Cl.: G07F 7/08, G07F 7/00, A45C 1/00, A45C 11/18, G06K 7/00

(54) **Transfer of electronic money**
Elektronische Geldüberweisung
Transfert de monnaie électronique

(30) Priority: 29.03.1999 FI 990695
(43) Date of publication of application: 04.10.2000
(73) Proprietor: Nokia Corporation, 02150 Espoo (FI)
(72) Inventor: Sami, Inkinen, 13100 Hämeenlinna (FI)
(74) Representative: Söderholm, Sampsa Petteri

(56) References cited:
- EP-A- 0 821 502
- WO-A-98/10363
- US-A- 5 887 266
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, no. 3, 1998, pages 110-117, XP000783249 ISSN: 0014-0171

## Description

The invention relates to transferring electronic money wirelessly.

The use of electronic money is becoming more and more common in the modem money world. It has been developed, among other things, electronic money cards, which are smart cards wherein one can deposit money in an electronic form, e.g. in a smart card reader of an automatic cash dispenser. Correspondingly, one pays with an electronic money card, for example, by placing it in a smart card reader, which reduces the balance set on the card by the amount of the payment.

Today, mobile stations are known which can be in connection with different parties (e.g. the Internet network) by means of data calls or short messages. This has enabled the transfer of electronic money with the help of a mobile station in many different ways. For example, a payment can be made with a communicator type mobile station as a data call using a subscriber identity module (SIM) to identify the payer.

The wireless transfer of electronic money is presented in the document WO 96/25828, where a payment is made with a mobile station, e.g. by means of an IR (infra red) link. The mobile station can be at the same time with the IR link in radio connection with a bank, in which case the bank can debit the payer's account with the amount of the payment, in real time.

When using an electronic money card as a means of payment for a purchase to be made by means of a mobile station, the money card can be placed for payment either in a smart card reader integrated into the mobile station or in a separate external smart card reader that is in connection with the mobile station. Both solutions require quite a lot of space and, therefore, said solutions are not very practicable in modem small-sized mobile stations.

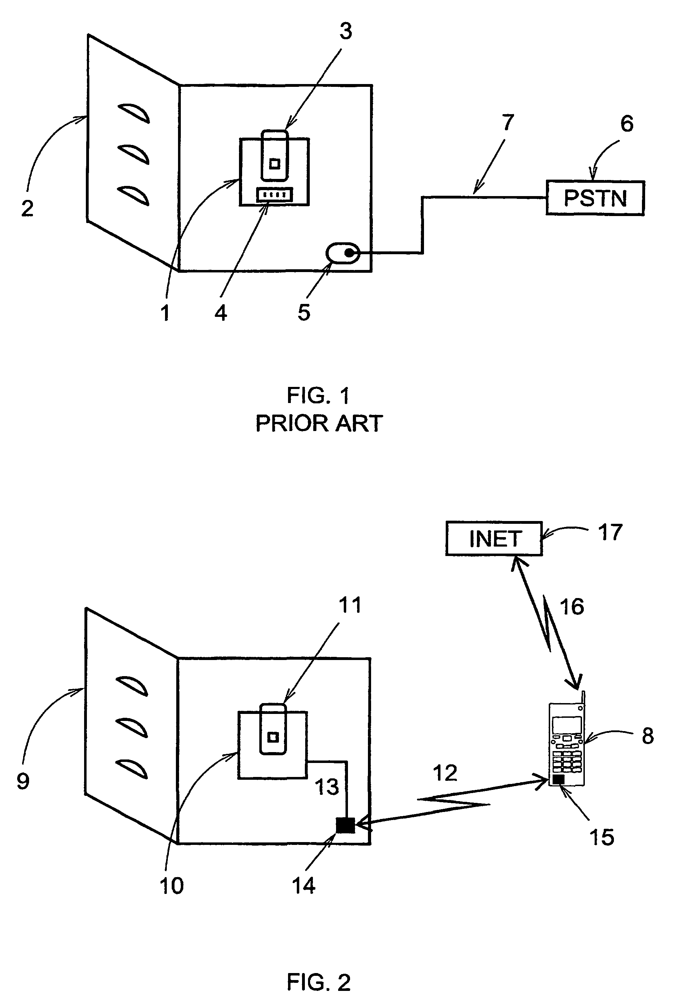

One embodiment according to the international patent application WO 98/10363, wherein a smart card reader 1 is integrated into a wallet 2 for displaying the balance of an electronic money card 3 is shown in Figure 1. When the electronic money card 3 is in the wallet 2 in a place that belongs to it, it is at the same time also in the card reader 1. The wallet 2 comprises a display 4 for displaying the balance of the money card 3. The wallet 2 also has a telecommunication part 5, which comprises a connector for connecting the card reader 1 to a public switched telephone network (PSTN). Through this, information about the balance of the electronic money card 3 can be transmitted via a line 7 to the PSTN 6. However, the embodiment presented here is only designed for displaying the card balance and transmitting the balance data.

Now, an invention has been made which will facilitate the transfer of electronic money through a device that is in connection with a telecommunication network. It is characteristic of the invention that it comprises a short-range radio transceiver that is integrated into a wallet and is in connection with a reader. In the present description and claims, a wallet means all cases and bags suitable for carrying and keeping money, as well as credit and smart cards or merely credit and smart cards.

The invention is based on technology that makes use of short-range radio connections, such as, e.g. LPRF (Low Power Radio Frequency) connection or WLAN (Wireless Local Area Network) connection. Hereinafter in this description, LPRF connection will be used as an example of a short-range radio connection. In some connections, LPRF technology is also called Bluetooth technology. LPRF connection is a short-range connection, a point-to-point connection, where information, which can be, e.g. data or voice is transferred at a radio frequency using low transfer power. In connection with LPRF technology, short range means a distance of about ten metres and in connection with WLAN technology, which has higher transmission power, a distance of a few dozen metres.

In a solution according to the invention, a smart card reader is integrated into a wallet in a place intended for credit cards and, in addition, the wallet comprises an LPRF module for establishing a short-range connection between the wallet and a device comprising the LPRF module which device is in connection with a telecommunication network. When a user has placed an electronic money card in its place in the wallet, it is possible to transfer electronic money in the telecommunication network with the help of the device, without taking out the card or the wallet. For example, when the device is a mobile station, this is possible by transferring the electronic money between the mobile station and the wallet over LPRF connection.

The teaching of the invention is disclosed in claims 1, 10, 18. Preferred embodiments are disclosed in claims 2-9,11-17,19-22.

According to a first aspect of the invention there is provided a wallet, which comprises a reader for receiving an electronic module being detachably coupled thereto and communication means for establishing a connection to outside the wallet for transferring information between the electronic module and a device outside the wallet.
It is characteristic of the wallet that it comprises as the means of communication a short-range radio transceiver that is integrated into the wallet and in connection with the reader for establishing a short-range radio frequency connection between the electronic module and the external device.

According to a second aspect of the invention there is provided a system, which comprises a mobile station and a wallet, the wallet comprising a reader for receiving an electronic module being detachably coupled thereto and communication means for establishing a connection to outside the wallet for transferring information between the electronic module and a device outside the wallet.
It is characteristic of the system that it comprises:
as said communication means, a first short-range radio transceiver, which is integrated into the wallet and in connection with the reader; and
a second short-range radio transceiver, which is integrated into and in connection with the mobile station
for establishing a short-range radio frequency connection between the electronic module and the mobile station.

According to a third aspect of the invention there is provided a method for transferring information in a system, which system comprises a wallet and an external device outside the wallet, the wallet comprising a reader for receiving an electronic module being detachably coupled thereto.
It is characteristic of the method that it comprises the steps of:
establishing a short-range radio frequency connection between the electronic module and the external device;
transferring information betweeen the electronic module and the external device over the short-range radio frequency connection.

In the following, the invention will be described in detail by referring to the enclosed drawing, in which
- Figure 1: shows a smart card reader integrated into a wallet according to prior art;
- Figure 2: shows an implementation according to the invention for transferring electronic money from and to a money card, which is in a smart card reader in a wallet, making use of LPRF connection;
- Figure 3: shows a block diagram of an LPRF module;
- Figure 4: shows a possible way to establish a connection between a smart card reader and an LPRF module; and
- Figure 5: shows a block diagram of a mobile station, in view of the present invention.

Figure 1 was described above in connection with the description of prior art. Figure 2 shows a first embodiment according to the invention, where an electronic purchase made with a mobile station 8 is paid with a money card 11, which is in a smart card reader 10 inside a wallet 9, making use of an LPRF connection 12. The assembly comprises the smart card reader 10, integrated into the wallet 9, wherein it is possible to place the electronic money card 11 and from where there is a connection 13 to a first LPRF module 14, located in the wallet 9, for establishing the LPRF connection 12 between the smart card reader 10 and the mobile station 8. The mobile station 8 comprises a second LPRF module 15, as well as means for establishing a cellular network connection 16, e.g. a data connection or a Wireless Application Protocol (WAP) connection to an Internet network 17, in a well-known manner.

The wallet 9 in itself can be made of various materials, e.g. leather, fabric, plastic or some other corresponding material. The smart card reader 10 in the wallet 9 is placed in and attached to, e.g. a credit card pocket in between two layers of leather so that when the money card 11 is in its place in the credit card pocket, the contact surfaces of the money card 11 are in contact with the connectors of the smart card reader 10. One implementation for attaching the smart card reader 10 to the wallet 9 is presented in the document WO 98/10363.

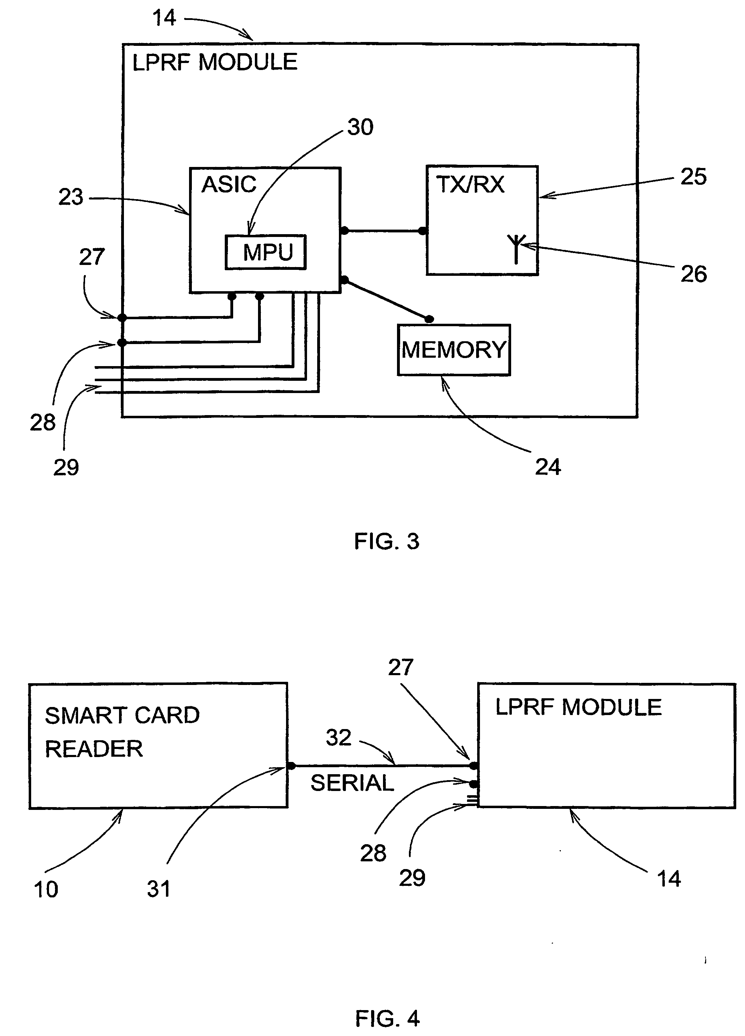

The first LPRF module 14 is integrated into the wallet, for example, by attaching it in between the wallet's two layers of leather. A block diagram of the first LPRF module 14 in view of the invention is shown in Figure 3. The second LPRF module 15, located in the mobile station 8, can be presented by means of a similar block diagram. The LPRF module 14 is a programmable device, which comprises an integrated circuit 23 (ASIC, Application specific integrated circuit) comprising a processor 30 (MPU, Micro Processor Unit). The ASIC 23 controls the operation of the LPRF module 14 and it can carry out the processing of baseband signals. In addition, the LPRF module 14 comprises a memory 24 and a transceiver 25 (TX/RX), which transmits and receives information at a frequency of 2.45 GHz, through an antenna 26 of the LPRF module. For connecting the LPRF module 14 to an external device, it comprises a connector 27 for asynchronic series mode data transfer, a connector 28 for an I²C bus and connectors 29 for a few general-purpose I/O gates.

The smart card reader 10, which comprises technology known as such, comprises a processor, a memory and a serial connection for transferring data to and from the smart card reader, in serial mode.

The connection 13 between the smart card reader 10 and the first LPRF module 14 can be established, for example, by connecting the smart card reader 10, which comprises a serial connection, and the LPRF module 14 to each other with a bus, where information is transferred in serial mode. This is shown in Figure 4, where a flexible flat cable is connected to connectors 31 and 27, intended for serial mode data communications of the smart card reader 10 and the LPRF module 14, for transferring information in serial mode between the smart card reader 10 and the LPRF module 14. The flat cable 32 can be placed, e.g. underneath the surface of the wallet 9 in between two layers of leather, so that it is not visible.

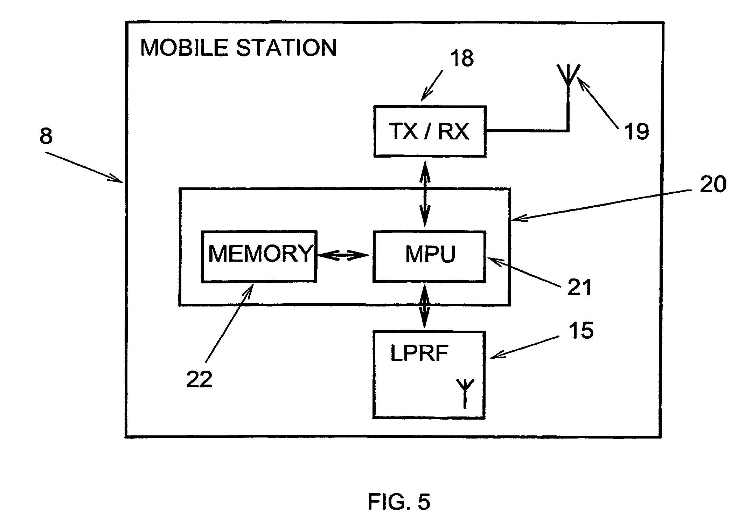

The mobile station 8 can be any mobile station that contains an LPRF module, e.g. a cellular telephone of a cellular radio network or a communicator type mobile station, such as Nokia 9000 Communicator. A block diagram of the mobile station 8 is shown in Figure 5, in view of the invention. The mobile station 8 comprises a transceiver 18 (TX/RX) for communication on a radio path, the TX/RX comprising a transmitter branch and a receiver branch. The transmitter branch comprises blocks that carry out coding, interleaving, encryption, burst formation, modulation and transmission, which are known as such and they are not shown in the figure. The receiver branch comprises corresponding blocks that carry out reception, demodulation, bit detection, decryption, de-interleaving, as well as decoding, which are known as such and they are not shown in the figure. The mobile station 8 comprises an antenna 19 for communication on a radio path and a control unit 20, which comprises a processor 21 (MPU) and a memory 22, for controlling the other units of the mobile station 8. In addition, the mobile station 8 comprises the second LPRF module 15 for establishing a short-range RF connection to the first LPRF module 14.

A suitable number of batteries are installed in the wallet 9 for feeding current to the smart card reader 10 and the LPRF module 14. The implementation of the current feed is obvious to a person skilled in the art, and it is not shown in the figure.

In a situation shown in Figure 2, a bill is paid, for example, in the following way. The mobile station 8 is in connection with an address of the Internet network 17, where a payment is being demanded. A message of this arrives to the mobile station 8, which establishes with the second LPRF module 15 the LPRF connection 12 to the first LPRF module 14 in the wallet 9 from where the information relating to the payment goes, through the connection 13, to the smart card reader 10, which debits the balance of the electronic money card 11, placed therein, with the sum of the purchase. The application, which controls the debiting of the money card 11 is preferably located in the memory 22 of the mobile station 8.

When the electronic money card 11 has been debited with a sum of money, this electronic money goes through the smart card reader 10 and the connection 13 to the first LPRF module 14, from where the money is sent through the LPRF connection 12 to the mobile station 8, from where the money goes further through the cellular network connection 16 to the Internet network 17, to a server, whereto the payee has a connection. The last mentioned is not shown in the figure.

In a second embodiment according to the invention, a smart card is used as a means of payment, wherein electronic payment units have been charged. One payment unit may correspond to, for example, one cinema ticket or one single ticket on public means of transport. Payment is made in a way similar to that shown in connection with the first embodiment.

In a third embodiment according to the invention, an LPRF connection is established between a wallet's LPRF module and an LPRF module, which is contained by and in connection with a personal computer (PC). Said PC is in connection with the Internet network. In this embodiment, electronic money can conveniently be transferred between the Internet network and a money card that is in a smart card reader in the wallet. In this case, the application that controls the transfer of money from and to the money card is in the PC's memory.

According to a fourth embodiment according to the invention, a wallet is in LPRF connection directly with a shop's payment terminal. Purchases made in the shop can be paid with a charge card that is in a smart card reader in the wallet, over the LPRF connection. When the connection between the payment terminal and the wallet has been established, a user keys with the payment terminal the identification number of his/her charge card. If the identification number is correct and the balance in the charge card is sufficient, the transfer of money will be carried out from the charge card to the shop's payment terminal over the LPRF connection. The application that controls the money transfer transaction is preferably located in the payment terminal's memory. Alternatively, the LPRF connection can be established between the wallet and a mobile station, whereupon the mobile station can have an IR link with the shop's payment terminal in accordance with WO 96/25828. Now, a user keys with his/her mobile station the identification number of his/her charge card, which identification number is being compared by the mobile station's charge card application to a pre-stored one. If the identification number is correct and the balance in the charge card is sufficient, the transfer of money will be carried out from the charge card to the shop's payment terminal over the LPRF connection and the IR link.

With the present invention, advantages will be achieved when compared to previous solutions. A smart card reader integrated into a wallet uses standardsized electronic charge cards. It will no longer be necessary to integrate a smart card reader into a mobile station; neither does a smart card reader have to be a fixed accessory of a mobile station, whereupon space will be saved. Throughout the transfer of money, the money card is in its natural place in the wallet, where the user keeps money and credit cards in any case. If the phone is stolen, the money card will not be lost at the same time. In addition, transferring money is safer, because an LPRF connection in itself comprises certain encryption mechanisms. It is also difficult for a third party to interfere during the transfer of money, because it is very difficult for a third party to detect the point at which money is being transferred, because the money card is in the wallet all the time. Thus, the user can keep the card in its place in the wallet and the wallet in the pocket, and carry out the transfer of money with the mobile station through the LPRF connection without attracting any additional attention. This means that safety in the transfer of electronic money increases, because an outside person only sees that the user is pressing the keys of a mobile station, e.g. a hand-held mobile phone or a so-called media phone, which is usual, e.g. in connection with the sending of short messages. Thus, an outside person does not notice that a money transfer operation is going on.

This paper presents the implementation and embodiments of the present invention with the help of examples. It will be appreciated by a person skilled in the art that the present invention is not restricted to details of the embodiments presented above, and that the invention can also be implemented in another form without deviating from the characteristics of the invention. The embodiments presented above should be considered illustrative, but not restricting. Thus, the possibilities of implementing and using the invention are only restricted by the enclosed claims. Consequently, the various options of implementing the invention as determined by the claims, including the equivalent implementations, also belong to the scope of the invention.

## Claims

1. A wallet (9), which comprises a smart card reader (10) for receiving an electronic module (11) being detachably coupled thereto and communication means (13,14) for establishing a connection (12) to outside the wallet for transferring information between the electronic module (11) and an external device (8) outside the wallet (9), **characterised in that** it comprises
as the communication means a short-range radio transceiver (14) that is integrated into the wallet (9) and in connection with the smart card reader (10) for establishing a short-range radio frequency connection (12) between the electronic module (11) and the external device (8), and **in that**
the wallet (9) is configured so that the balance of the electronic module (11) is debitable in the control of information received, over said short-range radio frequency connection (12), from an application located in the external device (8).

2. A wallet (9) according to claim 1, **characterised in that** the short-range radio transceiver (14) is an LPRF transceiver.

3. A wallet (9) according to claim 2, **characterised in that** the external device is a mobile station (8) comprising an LPRF transceiver (15).

4. A wallet (9) according to claim 2, **characterised in that** the external device is a computer comprising an LPRF transceiver.

5. A wallet (9) according to claim 2, **characterised in that** the external device is a payment terminal comprising an LPRF transceiver.

6. A wallet (9) according to claim 2, **characterised in that** it comprises a serial mode connection (13) between the smart card reader (10) and the LPRF transceiver (14).

7. A wallet (9) according to claim 2, **characterised in that** the electronic module (11) intended to be coupled to the wallet (9) is an electronic money card or a charge card.

8. A wallet (9) according to claim 7, **characterised in that** the LPRF transceiver (14) is arranged to transfer electronic money from the electronic money card (11) to said external device (8).

9. A wallet (9) according to claim 7, **characterised in that** the LPRF transceiver (14) is arranged to receive electronic money from said external device (8) to the electronic money card (11).

10. A system, which comprises an external device (8) and a wallet (9), the wallet comprising a smart card reader (10) for receiving an electronic module (11) being detachably coupled thereto and communication means (13, 14) for establishing a connection (12) to outside the wallet for transferring information between the electronic module (11) and an external device (8) outside the wallet (9), **characterised in that** it comprises
as said communication means, a first short-range radio transceiver (14), which is integrated into the wallet (9) and in connection with the smart card reader (10); and
a second short-range radio transceiver (15), which is integrated into and in connection with the external device (8) for establishing a short-range radio frequency connection (12) between the electronic module (11) and the external device (8),
**in that** the system is configured to debit the balance of the electronic module, and **in that**
the external device (8) comprises an application (22) configured to control said debiting of electronic module over said short-range radio frequency connection (12).

11. A system according to claim 10, **characterised in that** said first short-range radio transceiver (14) is an LPRF transceiver and said second short-range radio transmitter-receiver (15) is an LPRF transceiver.

12. A system according to claim 11, **characterised in that** the electronic module (11) intended to be coupled to the wallet (9) is an electronic money card or a charge card.

13. A system according to claim 12, **characterised in that** it is arranged to transfer electronic money from the wallet (9) over the LPRF connection (12) to the external device (8) and from the external device (8) through a cellular network connection (16) or an infra red link to a third device (17).

14. A system according to claim 12, **characterised in that** it is arranged to transfer electronic money from a third device (17) through a cellular network connection (16) or an infra red link to the mobile station (8) and from the external device (8) over the LPRF connection to the wallet (9).

15. A system according to claim 10, **characterised in that** in connection with debiting said electronic module, the application located in the external device is configured
to receive an identification number of said electronic module given by a user of the wallet, and
to verify that the identification number is correct.

16. A system according to claim 15, **characterised in that** said application is configured to verify that the identification number is correct by comparing said identification number to a pre-stored identification number.

17. A system according to any one of claims 10 or 16, **characterised in that** the external device is a mobile station.

18. A method for transferring information in a system, which system comprises a wallet (9) and an external device (8) outside the wallet (9), the wallet comprising a smart card reader (10) for receiving an electronic module (11) being detachably coupled thereto and communication means (13, 14) for establishing a connection (12) to outside the wallet for transferring information between the electronic module (11) and an external device (8) outside the wallet (9), **characterised in that** the method comprises the steps of:
establishing a short-range radio frequency connection (12) between the electronic module (11) and the external device (8);
transferring information between the electronic module (11) and the external device (8) over the short-range radio frequency connection,
debiting the balance of the electronic module, and
controlling said debiting by means of an application (22) located in said external device (8), said controlling being carried out over said short-range radio frequency connection (12).

19. A method according to claim 18, **characterised in that** the external device (8) is a mobile station, and the method further comprises: transferring money in an electronic form from the electronic module (11) to the mobile station (8) over the short-range radio frequency connection and from the mobile station to an external payment terminal over an infra red link for paying a bill or a payment.

20. A method according to claim 18, **characterised in that** in connection with debiting the balance of said electronic module the method further comprises the steps of:
receiving an identification number of said electronic module given by a user of the wallet, and
verifying by means of said application that said identification number is correct.

21. A method according to claim 20, **characterised in that** said said verifying is conducted by comparing said identification number to a pre-stored identification number.

22. A method according to any one of claims 18 to 21, **characterised in that** the external device is a mobile station.

## Patentansprüche

1. Geldbörse (9), umfassend ein Smart-Card-Lesegerät (10) zum Empfangen eines elektronischen Moduls (11), welches abnehmbar damit verbunden ist, und Kommunikationsmittel (13, 14) zum Aufbauen einer Verbindung (12) nach außen in Bezug auf die Geldbörse, zum Transferieren von Information zwischen dem elektronischen Modul (11) und einer externen Vorrichtung (8) außerhalb der Geldbörse (9), **dadurch gekennzeichnet, dass** sie umfasst:
als die Kommunikationsmittel, einen Nahbereichs-Funktransceiver (14), der in der Geldbörse (9) integriert ist, und in Verbindung mit dem Smart-Card-Lesegerät (10) steht, um eine Nahbereichs-Funkfrequenzverbindung (12) zwischen dem elektronischen Modul (11) und der externen Vorrichtung (8) aufzubauen, und dass
die Geldbörse (9) konfiguriert ist, so dass der Kontostand des elektronischen Moduls (11) unter der Steuerung von über die Nahbereichs-Funkfrequenz-Verbindung (12) empfangener Information von einer Anwendung belastbar ist, die sich in der externen Vorrichtung (8) befindet.

2. Geldbörse (9) nach Anspruch 1, **dadurch gekennzeichnet, dass** der Nachbereichs-Funktransceiver (14) ein LPRF-Transceiver ist.

3. Geldbörse (9) nach Anspruch 2, **dadurch gekennzeichnet, dass** die externe Vorrichtung eine Mobilstation (8) ist, die einen LPRF-Transceiver (15) umfasst.

4. Geldbörse (9) nach Anspruch 2, **dadurch gekennzeichnet, dass** die externe Vorrichtung ein Computer ist, der einen LPRF-Transceiver umfasst.

5. Geldbörse (9) nach Anspruch 2, **dadurch gekennzeichnet, dass** die externe Vorrichtung ein Zahlungsterminal ist, welches einen LPRF-Transceiver umfasst.

6. Geldbörse (9) nach Anspruch 2, **dadurch gekennzeichnet, dass** sie eine Verbindung (13) im seriellen Modus zwischen dem Smart-Card-Lesegerät (10) und dem LPRF-Transceiver (14) umfasst.

7. Geldbörse (9) nach Anspruch 2, **dadurch gekennzeichnet, dass** das elektronische Modul (11), welches vorgesehen ist, um mit der Geldbörse (9) verbunden zu werden, eine elektronische Geldkarte oder eine Kreditkarte ist.

8. Geldbörse (9) nach Anspruch 7, **dadurch gekennzeichnet, dass** der LPRF-Transceiver (14) eingerichtet ist, um elektronisches Geld von der elektronischen Geldkarte (11) an die externe Vorrichtung (8) zu transferieren.

9. Geldbörse (9) nach Anspruch 7, **dadurch gekennzeichnet, dass** der LPRF-Transceiver (14) eingerichtet ist, um elektronisches Geld von der externen Vorrichtung (8) an die elektronische Geldkarte (11) zu empfangen.

10. System, welches eine externe Vorrichtung (8) und eine Geldbörse (9) umfasst, wobei die Geldbörse ein Smart-Card-Lesegerät (10) zum Empfangen eines elektronischen Moduls (11), welches abnehmbar damit verbunden ist, und Kommunikationsmittel (13, 14) zum Aufbauen einer Verbindung (12) nach außen in Bezug auf die Geldbörse umfasst, zum Transferieren von Information zwischen dem elektronischen Modul (11) und einer externen Vorrichtung (8) außerhalb der Geldbörse (9), **dadurch gekennzeichnet, dass** es umfasst
als die Kommunikationsmittel, einen ersten Nahbereichs-Funktransceiver (14), welcher in der Geldbörse (9) integriert ist und sich in Verbindung mit dem Smart-Card-Lesegerät (10) befindet; und
einen zweiten Nahbereichs-Funktransceiver (15), welcher in der externen Vorrichtung (8) integriert ist und sich in Verbindung damit befindet, zum Aufbauen einer Nahbereichs-Funkfrequenz-Verbindung (12) zwischen dem elektronischen Modul (11) und der externen Vorrichtung (8),
dass das System konfiguriert ist, um den Kontostand des elektronischen Moduls zu belasten,
und dass die externe Vorrichtung (8) eine Anwendung (22) umfasst, die konfiguriert ist, um das Belasten des elektronischen Moduls über die Nahbereichs-Funkfrequenz-Verbindung (12) zu steuern.

11. System nach Anspruch 10, **dadurch gekennzeichnet, dass** der erste Nahbereichs-Funktransceiver (14) ein LPRF-Transceiver ist und der zweite Nahbereichs-Funksende-Empfänger (15) ein LPRF-Transceiver ist

12. System nach Anspruch 11, **dadurch gekennzeichnet, dass** das elektronische Modul (11), welches vorgesehen ist, um mit der Geldbörse (9) verbunden zu werden, eine elektronische Geldkarte oder eine Kreditkarte ist.

13. System nach Anspruch 12, **dadurch gekennzeichnet, dass** es eingerichtet ist, um elektronisches Geld von der Geldbörse (9) über die LPRF-Verbindung (12) an die externe Vorrichtung (8) und von der externen Vorrichtung (8) durch eine Mobilfunk-Netzwerkverbindung (16) oder eine Infrarot-Verbindung an eine dritte Vorrichtung (17) zu transferieren.

14. System nach Anspruch 12, **dadurch gekennzeichnet, dass** es eingerichtet ist, um elektronisches Geld von einer dritten Vorrichtung (17) durch eine Mobilfunk-Netzwerkverbindung (16) oder eine Infrarot-Verbindung an die Mobilstation (8) und von der externen Vorrichtung (8) über die LPRF-Verbindung an die Geldbörse (9) zu transferieren.

15. System nach Anspruch 10, **dadurch gekennzeichnet, dass** in Verbindung mit einem Belasten des elektronischen Moduls, die Anwendung, die sich in der externen Vorrichtung befindet, konfiguriert ist, um eine Identifikationsnummer des elektronischen Moduls zu empfangen, welche von einem Nutzer der Geldbörse eingegeben wird, und um zu überprüfen, ob die Identifikationsnummer richtig ist.

16. System nach Anspruch 15, **dadurch gekennzeichnet, dass** die Anwendung konfiguriert ist, um zu überprüfen, ob die Identifikationsnummer richtig ist, indem die Identifikationsnummer mit einer vorher gespeicherten Identifikationsnummer verglichen wird.

17. System nach irgendeinem der Ansprüche 10 oder 16, **dadurch gekennzeichnet, dass** die externe Vorrichtung eine Mobilstation ist.

18. Verfahren zum Transferieren von Information in einem System, wobei das System eine Geldbörse (9) und eine externe Vorrichtung (8) außerhalb der Geldbörse (9) umfasst, wobei die Geldbörse ein Smart-Card-Lesegerät (10) zum Empfangen eines elektronischen Moduls (11), welches abnehmbar damit verbunden ist, und Kommunikationsmittel (13, 14) zum Aufbauen einer Verbindung (12) nach außen in Bezug auf die Geldbörse umfasst, um Information zwischen dem elektronischen Modul (11) und einer externen Vorrichtung (8) außerhalb der Geldbörse (9) zu transferieren, **dadurch gekennzeichnet, dass** das Verfahren die Schritte umfasst:
Aufbauen einer Nahbereichs-Funkfrequenz-Verbindung (12) zwischen dem elektronischen Modul (11) und der externen Vorrichtung (8);
Transferieren von Information zwischen dem elektronischen Modul (11) und der externen Vorrichtung (8) über die Nahbereichs-Funkfrequenz-Verbindung, Belasten des Kontostandes des elektronischen Moduls, und
Steuern des Belastens mittels einer Anwendung (22), die sich in der externen Vorrichtung (8) befindet, wobei das Steuern über die Nahbereichs-Funkfrequenz-Verbindung (12) ausgeführt wird.

19. Verfahren gemäß Anspruch 18, **dadurch gekennzeichnet, dass** die externe Vorrichtung (8) eine Mobilstation ist und das Verfahren weiter umfasst:
Transferieren von Geld in elektronischer Form von dem elektronischen Modul (11) an die Mobilstation (8) über die Nahbereichs-Funkfrequenz-Verbindung und von der Mobilstation zu einem externen Zahlungsterminal über eine Infrarot-Verbindung, um eine Rechnung oder eine Zahlung zu begleichen.

20. Verfahren gemäß Anspruch 18, **dadurch gekennzeichnet, dass** in Verbindung mit dem Belasten des Kontostandes des elektronischen Moduls, das Verfahren weiter die Schritte umfasst:
Empfangen einer Identifikationsnummer des elektronischen Moduls, welche durch einen Nutzer der Geldbörse eingegeben wird, und
Überprüfen mittels der Anwendung, ob die Identifikationsnummer richtig ist.

21. Verfahren gemäß Anspruch 20, **dadurch gekennzeichnet, dass** die Überprüfung durch Vergleichen der Identifikationsnummer mit einer vorher gespeicherten Identifikationsnummer durchgeführt wird.

22. Verfahren gemäß irgendeinem der Ansprüche 18 bis 21, **dadurch gekennzeichnet, dass** die externe Vorrichtung eine Mobilstation ist.

## Revendications

1. Portefeuille (9), qui comprend un lecteur de carte intelligente (10) pour recevoir un module électronique (11) qui est couplé de manière amovible à celui-ci et un moyen de communication (13, 14) pour établir une connexion (12) à l'extérieur du portefeuille pour transférer des informations entre le module électronique (11) et un dispositif externe (8) à l'extérieur du portefeuille (9), **caractérisé en ce qu'**il comprend
comme moyen de communication, un émetteur/récepteur radio à courte portée (14) qui est intégré dans le portefeuille (9) et en connexion avec le lecteur de carte intelligente (10) pour établir une connexion radiofréquence à courte portée (12) entre le module électronique (11) et le dispositif externe (8), et **en ce que**
le portefeuille (9) est configuré de sorte que le solde du module électronique (11) est débitable dans la commande des informations reçues, sur ladite connexion radiofréquence à courte portée (12) depuis une application placée dans le dispositif externe (8).

2. Portefeuille (9) selon la revendication 1, **caractérisé en ce que** l'émetteur/récepteur radio à courte portée (14) est un émetteur/récepteur LPRF.

3. Portefeuille (9) selon la revendication 2, **caractérisé en ce que** le dispositif externe est une station mobile (8) comprenant un émetteur/récepteur LPRF (15).

4. Portefeuille (9) selon la revendication 2, **caractérisé en ce que** le dispositif externe est un ordinateur comprenant un émetteur/récepteur LPRF.

5. Portefeuille (9) selon la revendication 2, **caractérisé en ce que** le dispositif externe est un terminal de paiement comprenant un émetteur/récepteur LPRF.

6. Portefeuille (9) selon la revendication 2, **caractérisé en ce qu'**il comprend une connexion en mode série (13) entre le lecteur de carte intelligente (10) et l'émetteur/récepteur LPRF (14).

7. Portefeuille (9) selon la revendication 2, **caractérisé en ce que** le module électronique (11) destiné à être couplé au portefeuille (9) est une carte de paiement électronique ou une carte de paiement.

8. Portefeuille (9) selon la revendication 7, **caractérisé en ce que** l'émetteur/récepteur LPRF (14) est conçu pour transférer l'argent électronique depuis la carte de paiement électronique (11) au dit dispositif externe (8).

9. Portefeuille (9) selon la revendication 7, **caractérisé en ce que** l'émetteur/récepteur LPRF (14) est conçu pour recevoir l'argent électronique depuis ledit dispositif externe (8) vers la carte de paiement électronique (11).

10. Système qui comprend un dispositif externe (8) et un portefeuille (9), le portefeuille comprenant un lecteur de carte intelligente (10) pour recevoir un module électronique (11) qui est couplé de manière amovible à celui-ci et un moyen de communication (13, 14) pour établir une connexion (12) vers l'extérieur du portefeuille pour transférer des informations entre le module électronique (11) et un dispositif externe (8) à l'extérieur du portefeuille (9), **caractérisé en ce qu'**il comprend
comme ledit moyen de communication, un premier émetteur/récepteur radio à courte portée (14), qui est intégré dans le portefeuille (9) et en connexion avec le lecteur de carte intelligente (10) ; et
un second émetteur/récepteur radio à courte portée (15), qui est intégré dans et en connexion avec le dispositif externe (a) pour établir une connexion radiofréquence à courte portée (12) entre le module électronique (11) et le dispositif externe (8),
**en ce que** le système est configuré pour débiter le solde du module électronique, et **en ce que**
le dispositif externe (8) comprend une application (22) configurée pour commander ledit débit du module électronique sur ladite connexion radiofréquence à courte portée (12).

11. Système selon la revendication 10, **caractérisé en ce que** ledit premier émetteur/récepteur radio à courte portée (14) est un émetteur/récepteur LPRF et ledit second émetteur/récepteur radio à courte portée (15) est un émetteur/récepteur LPRF.

12. Système selon la revendication 11, **caractérisé en ce que** le module électronique (11) destiné à être couplé au portefeuille (9) est une carte de paiement électronique ou une carte de paiement.

13. Système selon la revendication 12, **caractérisé en ce qu'**il est conçu pour transférer l'argent électronique depuis le portefeuille (9) sur la connexion LPRF (12) au dispositif externe (8) et depuis le dispositif externe (8) par l'intermédiaire d'une connexion de réseau cellulaire (16) ou d'une liaison infrarouge à un troisième dispositif (17).

14. Système selon la revendication 12, **caractérisé en ce qu'**il est conçu pour transférer l'argent électronique depuis un troisième dispositif (17) par l'intermédiaire de la connexion de réseau cellulaire (16) ou d'une liaison infrarouge à la station mobile (8) et depuis le dispositif externe (8) sur la connexion LPRF au portefeuille (9).

15. Système selon la revendication 10, **caractérisé en ce qu'**en liaison avec le débit dudit module électronique, l'application placée dans le dispositif externe est configurée pour
recevoir un numéro d'identification dudit module électronique procuré par un utilisateur du portefeuille, et
vérifier que le numéro d'identification est correct.

16. Système selon la revendication 15, **caractérisé en ce que** ladite application est configurée pour vérifier que le numéro d'identification est correct en comparant ledit numéro d'identification à un numéro d'identification prémémorisé.

17. Système selon l'une quelconque des revendications 10 ou 16, **caractérisé en ce que** le dispositif externe est une station mobile.

18. Procédé pour transférer des informations dans un système, lequel système comprend un portefeuille (9) et un dispositif externe (8) à l'extérieur du portefeuille (9), le portefeuille comprenant un lecteur de carte intelligente 10 pour recevoir un module électronique (11) qui est couplé de manière amovible à celui-ci et un moyen de communication (13, 14) pour établir une connexion (12) vers l'extérieur du portefeuille pour transférer des informations entre le module électronique (11) et un dispositif externe (8) à l'extérieur du portefeuille (9), **caractérisé en ce que** le procédé comprend les étapes consistant à :
établir une connexion radiofréquence à courte portée (12) entre le module électronique (11) et le dispositif externe (8) ;
transférer des informations entre le module électronique (11) et le dispositif externe (8) sur la connexion radiofréquence à courte portée ;
débiter le solde du module électronique, et
contrôler ledit débit au moyen d'une application (22) placée dans le dispositif externe (8), ladite commande étant effectuée sur la connexion radiofréquence à courte portée (12).

19. Procédé selon la revendication 18, **caractérisé en ce que** le dispositif externe (8) est une station mobile, et le procédé comprend les opérations consistant à : transférer l'argent sous forme électronique depuis le module électronique (11) vers la station mobile (8) sur la connexion radiofréquence à courte portée et de la station mobile à un terminal de paiement externe sur une liaison infrarouge pour payer une facture ou un paiement.

20. Procédé selon la revendication 18, **caractérisé en ce qu'**en liaison avec le débit du solde dudit module électronique, le procédé comprend, en outre, les étapes consistant à :
recevoir un numéro d'identification dudit module électronique procuré par un utilisateur du portefeuille, et
vérifier au moyen de ladite application que ledit numéro d'identification est correct.

21. Procédé selon la revendication 20, **caractérisé en ce que** ladite vérification est conduite en comparant ledit numéro d'identification à un numéro d'identification prémémorisé.

22. Procédé selon l'une quelconque des revendications 18 à 21, **caractérisé en ce que** le dispositif externe est une station mobile.
